# EUROPEAN PATENT APPLICATION

(11) **EP 2 653 841 A1**
(43) Date of publication of application: **23.10.2013**
(21) Application number: 11849578.7
(22) Date of filing: 20.05.2011
(51) Int. Cl.: G01F 3/22, G01F 15/075, G01F 25/00

(54) **GAS METER APPARATUS**

(30) Priority: 13.12.2010 JP 2010276497
(71) Applicant: Panasonic Corporation, Osaka 571-8501 (JP)
(72) Inventor: GOTOU, Hirokazu, Chuo-ku, Osaka 540-6207 (JP); NAKABAYASHI, Yuji, Chuo-ku, Osaka 540-6207 (JP); FUJII, Yuji, Chuo-ku, Osaka 540-6207 (JP); TAKEMURA, Kouichi, Chuo-ku, Osaka 540-6207 (JP); WATANABE, Aoi, Chuo-ku, Osaka 540-6207 (JP)
(74) Representative: Schwabe - Sandmair - Marx
(86) International application number: PCT/JP2011/002829
(87) International publication number: WO 2012/081136

(57) **Abstract**

A gas meter apparatus (1) of the present invention comprises a flow measuring device (5) which measures a gas flow; a measurement value calculating section (21) and a liquid crystal display section (2) which are configured to calculate an integrated value of the measured gas flow and electrically display the integrated value. Every time the measurement value calculating section (21) determines that the integrated value has reached 1 liter, it informs a light emission commanding section (22) of determination result. In response to this information, the light emission commanding section (22) causes a LED light emitting section (3) to emit light toward a sensor (7). Therefore, the gas meter apparatus (1) is able to conduct a test by a test method in which a change in the displayed integrated value of the gas flow can be known from reflected light of emitted light, even when the integrated value of the gas flow is displayed in a digital form.

## Description

### Technical Field

The present invention relates to a gas meter apparatus which measures a gas flow (gas flow rate) and calculates an integrated value of the gas flow.

### Background Art

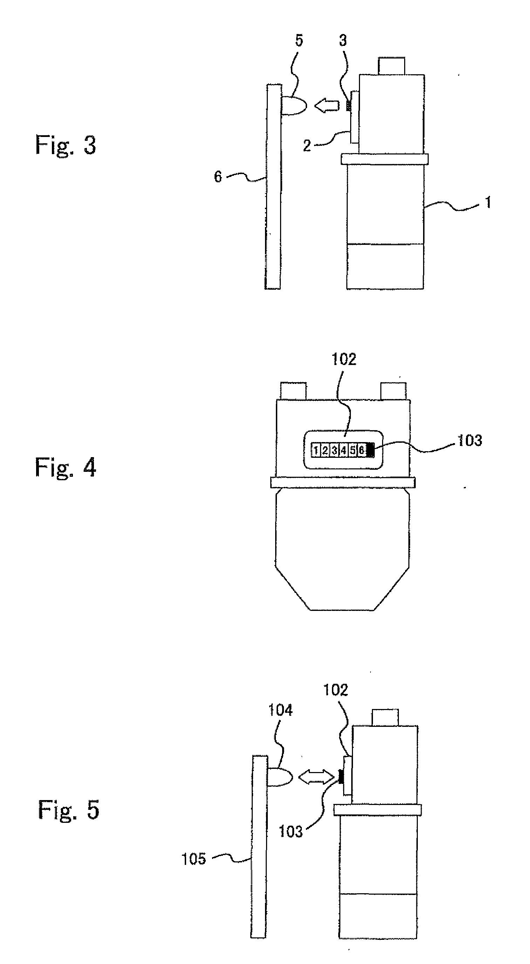

A gas meter (gas meter apparatus) is configured to integrate a gas usage amount based on a detected gas flow and display the integrated usage amount. Conventionally, as a display method for displaying the integrated value of the gas flow, for example, a rotary drum type display section 102 which displays numeric values as shown in Fig. 4 is used. The rotary drum type display section 102 is configured to rotate a numeric value corresponding to each digit like a slot. According to the gas usage amount, the numeric value increases in order from ones place digit.

It is necessary to conduct a test to verify whether or not the integrated value (gas usage amount) of the gas flow is displayed correctly in the gas meter before shipment. As a method of this test, for example, there is proposed a gas meter in which a pulse corresponding to each predetermined integrated value (e.g., 1 liter) is output, and a test is conducted using a counted value of this pulse and a test gas flow (see Patent Literature 1).

### Citation List

### Patent Literature

Patent Literature 1: Japanese Laid-Open Patent Application Publication No. 2003-202259

### Summary of Invention

### Technical Problem

In a case where the gas meter is a diaphragm type gas meter which measures a gas flow by the number of times the gas passes through a measuring chamber and does not use electricity, that is, the gas meter is configured not to output the above stated pulse, the test using the counted value of the pulse cannot be conducted. Accordingly, in some cases, there is a need for a general test method adapted to a gas meter configured not to output the pulse.

As such a test method, there is a method, in which a reflection plate 103 is attached to a head of ones place digit of a rotary drum in the rotary drum type display section 102, as shown in Fig. 4, and a sensor 104 is provided to receive a light reflected by the reflection plate 103 which reflects the light emitted to a location facing the reflection plate 103, as shown in Fig. 5. Fig. 4 is a view showing an example of the gas meter in which the reflection plate is attached to the rotary drum type display section. Fig. 5 is a view showing an outline of the test method of the gas meter of Fig. 4.

That is, every time the integrated value of the gas flow reaches I liter, ones place digit (0 to 9) of the rotary drum go round. The test is conducted in such a manner that a test device 105 including the sensor 104 determines whether or not the reflected light from the reflection plate 103 is received in every 1 liter. More specifically, the gas is flowed so that the integrated value of the gas flow becomes 1 liter accurately, and a gas meter which is a tested target derives the integrated value of the gas flow. Then, it is tested whether or not the integrated value displayed in the gas meter which is the tested target matches a correct value of the integrated value of the gas flow, by using the reflected light from the reflection plate.

In this test method, a change in the displayed integrated value of the gas flow, i.e., a change in ones place digit displayed in the rotary drum, can be known as a physical phenomenon which is the reflected light from the reflection plate 103, which is a very simple method. This test method can be used in a test for a gas meter configured not to output a pulse corresponding to each predetermined integrated value. In other words, this test method is easy and general.

However, the integrated value of the gas flow is not always displayed in a display form like the rotary drum type display section 102, but may be displayed in a digital form. When the integrated value of the gas flow is displayed in the digital form, the reflection plate 103 cannot be attached and the test cannot be conducted by utilizing the reflected light from the reflection plate 103, unlike the above case. That is, the above test method which is easy and general cannot be used.

The present invention has been made to solve the above stated problems, and an object of the present invention is to provide a gas meter apparatus which can be tested by a test method in which a change in the displayed integrated value of the gas flow can be known from the reflected light of emitted light, even when the integrated value of the gas flow is displayed in the digital form.

### Solution to Problem

To solve the above stated problems, a gas meter apparatus of the present invention, comprises a measuring unit which measures a gas flow; a display unit which electrically displays an integrated value of the gas flow measured by the measuring unit, the integrated value being displayed in a numeric value form; a determiner unit which determines whether or the integrated value of the gas flow measured by the measuring unit has reached a predetermined value; and a light emitting unit which emits light to outside every time the determiner unit determines that the integrated value has reached the predetermined value.

In accordance with this configuration, since the gas meter apparatus comprises the measuring unit and the display unit, the integrated value of the gas flow is electrically displayed in a numeric value form, i.e., in a digital form. Since the gas meter apparatus comprises the determiner unit and the light emitting unit, the light can be emitted to outside every time the integrated value has reached the predetermined value, i.e., the integrated value displayed in the digital form increases by the predetermined value. Because of this, the fact that the integrated value displayed in the digital form in the gas meter apparatus increases by the predetermined value can be known by the light emission.

Therefore, the gas meter apparatus of the present invention has advantages that a test can be conducted by a test method in which a change in the displayed integrated value of the gas flow can be known from the reflected light of the emitted light, even when the integrated value of the gas flow is displayed in the digital form.

In the gas meter apparatus of the present invention, in the above configuration, a test mode indicating execution of a test for verifying whether or not the displayed integrated value of the gas flow is accurate and a use mode indicating a use state in which the integrated value of a used gas flow is calculated by the gas meter apparatus may be set in the gas meter apparatus; and the gas meter apparatus may further comprise an input unit which accepts setting command information which commands the test mode or the use mode to be set; wherein when the input unit accepts the setting command information which commands the test mode to be set, the light emitting unit emits light toward the test device which verifies whether or not the displayed integrated value of the gas flow is accurate.

In accordance with this configuration, since the gas meter apparatus comprises the input unit, it becomes possible to set a test mode or a use mode in which the gas flow used actually is measured, regarding the use of the gas meter apparatus.

When the input unit accepts the setting command information, which commands the test mode to be set, the light emitting unit emits light toward the test device. Therefore, the light emitting unit does not emit light during the use of the gas meter apparatus. This makes it possible to prevent the light emitting unit from emitting light unnecessarily during the use mode. As a result, an increase in electric power consumption caused by the light emission can be lessened.

In the gas meter apparatus of the present invention, in the above configuration, the predetermined value of the integrated value used to perform determination in the determiner unit may be 1 liter.

### Advantageous Effects of the Invention

The present invention has been configured as described above, and has advantages that a test can be conducted by a test method in which a change in a displayed integrated value of a gas flow can be known from reflected light of emitted light, even when the integrated value of the gas flow is displayed in a digital form.

### Brief Description of the Drawings

[Fig. 1] Fig. 1 is a front view showing an external appearance of a gas meter apparatus according to an embodiment of the present invention.
[Fig 2] Fig. 2 is a block diagram showing an example of a functional structure in a test mode, of the gas meter apparatus according to the embodiment of the present invention.
[Fig. 3] Fig. 3 is a view showing an outline of a test method of the gas meter apparatus according to the embodiment.
[Fig. 4] Fig. 4 is a view showing an example of a gas meter in which a reflection plate is attached to a rotary drum type display section.
[Fig. 5] Fig. 5 is a view showing an outline of a test mode of the gas meter of Fig. 4.

### Description of Embodiments

Hereinafter, a preferred embodiment of the present invention will be described with reference to the drawings. Hereinafter, throughout the drawings, the same or corresponding components are identified by the same reference symbols and will not be described in repetition.

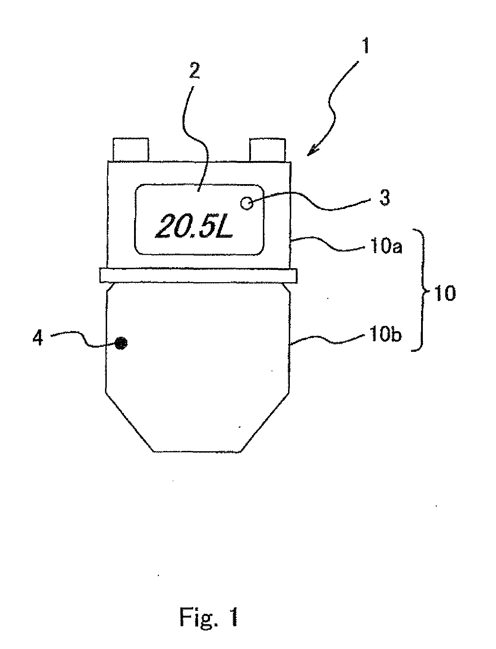

Fig. 1 is a front view showing an external appearance of a gas meter apparatus 1 according to the embodiment of the present invention.

The gas meter apparatus 1 according to the present embodiment is attached on a gas pipe, and is configured to calculate an integrated value of gas flow as a gas usage amount, during operation (use). In addition, the gas meter 1 is able to detect a gas flow abnormality and output an abnormality alarm or shut off a gas passage.

As shown in Fig. 1, the gas meter apparatus 1 includes as its outer shape, a gas meter apparatus body section 10 composed of an upper cover 10a and a lower cover 10b, a liquid crystal display section 2, a LED light emitting section 3, and a switch section (input unit) 4.

The gas meter apparatus body section 10 accommodates therein a flow measuring device (measuring unit) 5 for measuring a gas flow, a circuit board (not shown), etc.. In addition, a shut-off valve is provided inside of the gas meter apparatus body section 10, although this is not shown in particular. In a case where a main control section 20 (CPU) (described later) detects occurrence of an abnormal state based on monitored information, or a gas instrument connected to the main control section 20 inputs an abnormality signal to the main control section 20, a shut-off valve driving circuit shuts off the shut-off valve to prevent the gas from being supplied from the gas meter apparatus 1.

The flow measuring device 5 is an electronic measuring device for deriving the gas flow by flow measurement using ultrasonic sensors, but is not limited to this. For example, the flow measuring device 5 may be a diaphragm type measuring device which measures the gas flow by the number of times the gas passes through a measuring chamber. Or, the flow measuring device 5 may measure the gas flow by another method.

The liquid crystal display section 2 displays in a digital form a numeric value representing a gas usage amount which is derived by integrating the gas flow measured by the flow measuring device 5. The gas meter apparatus 1 according to the embodiment employs a liquid crystal display as a display element of digital display, but may use, for example, a LED display, or a fluorescent tube display. The LED light emitting section 3 is attached to a location at a right upper corner of the liquid crystal display section 2.

The LED light emitting section 3 emits light every time the integrated value of the gas flow reaches 1 liter.

The switch section 4 is an input unit with which a command is input to the gas meter apparatus 1. By pressing the switch section 4, a mode set in the gas meter apparatus 1 can be switched between a test mode and a use mode. The test mode is defined as a mode in which the test is conducted to verify whether or not the integrated value of the gas flow displayed in the liquid crystal display section 2 is accurate. The use mode is defined as a mode in which the gas meter apparatus 1 measures the gas flow of the gas used actually.

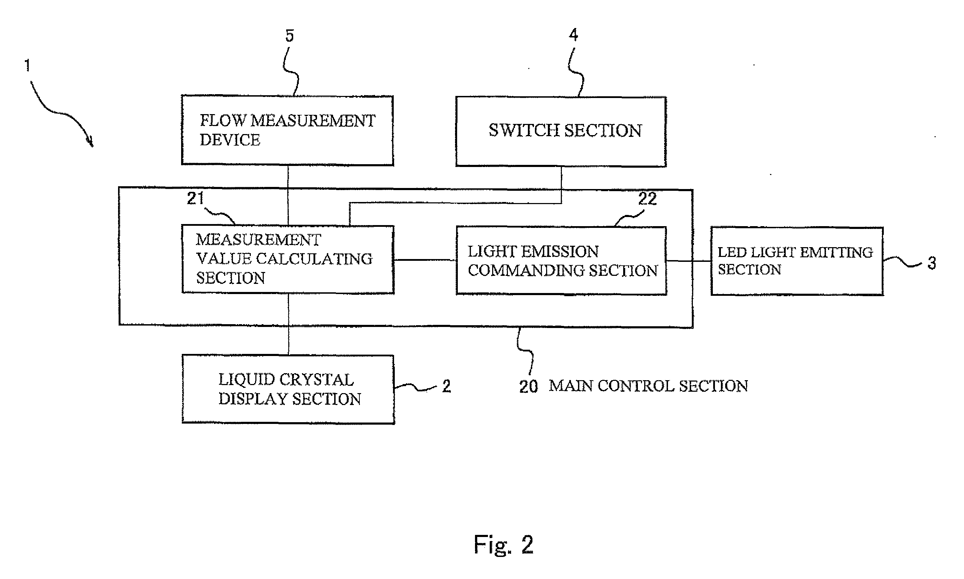

Next, a configuration of the gas meter apparatus 1 in the test mode will be described with reference to a functional block diagram of Fig. 2. Fig. 2 is a block diagram showing an example of a functional structure in the test mode, of the gas meter apparatus 1 according to the embodiment of the present invention.

As shown in Fig. 2, in addition to the liquid crystal display section 2, the LED light emitting section 3, the switch section 4, and the flow measuring device 5, the gas meter apparatus 1 further includes a measurement value calculating section 21 and a light emission commanding section 22 as functional blocks, in the main control section 20.

The main control section 20 is implemented by a CPU, and these functional blocks are implemented, for example, by executing in RAM or the like (not shown), programs read from a ROM(not shown) by the CPU.

The measurement value calculating section 21 calculates the integrated value based on measurement values of the gas flow received as inputs from the flow measuring device 5. The measurement value calculating section 21 outputs the calculated integrated value to the liquid crystal display section 2, which displays the integrated value. In a case where a command for setting the test mode is input to the measurement value calculating section 21 via the switch section 4, the measurement value calculating section 21 informs the light emission commanding section 22, of information indicating that integrated value of the gas flow has reached 1 liter, when the integrated value has reached 1 liter. The measurement value calculating section 21 and the liquid crystal display section 2 implement a display unit of the present invention. The measurement value calculating section 21 also corresponds to a determiner unit of the present invention.

The light emission commanding section 22 controls the light emission of the LED light emitting section 3 in response to the information from the measurement value calculating section 21. The light emission commanding section 22 and the LED light emitting section 3 implement a light emitting unit of the present invention.

In the gas meter apparatus 1 according to the present embodiment, upon the test mode being set via the switch section 4, the light emission commanding section 22 causes the LED light emitting section 3 to emit light every time the integrated value has reached 1 liter. When the measurement value calculating section 21 determines that the integrated value has reached 1 liter, the light emission commanding section 22 causes the LED light emitting section 3 to emit light for a predetermined time. This predetermined time is in a time range in which reception of the light emitted from the LED light emitting section 3 can be recognized. This time range may be suitably set depending on a method of recognition of a light emission state.

As the test of the gas meter apparatus 1, the following method which is general and can be implemented with a simple configuration is employed. This test method is such that a change in the displayed integrated value of the gas flow is known based on the reflected light of the emitted light as described above. However, in the gas meter apparatus 1 of the present embodiment, the display method of the integrated value is not a rotary drum display method. For this reason, the reflection plate cannot be attached to ones place digit of the rotary drum.

Accordingly, the gas meter apparatus 1 of the present embodiment is configured such that the LED light emitting section 3 emits the light toward the sensor 7 every time the integrated value of the gas flow has reached 1 liter, instead of the light reflected from the reflection plate. As shown in Fig. 3, the sensor 7 of the test device 6 receives the light emitted from the LED light emitting section 3. The test device 6 checks whether or not the integrated value of the actual gas flow corresponds to the displayed integrated value, based on a timing when the sensor 7 receives the light. Fig. 3 is a view showing an outline of the test method of the gas meter apparatus 1 according to the present embodiment.

As described above, the gas meter apparatus 1 of the present embodiment includes the flow measuring device 5 for measuring the gas flow, the measurement value calculating section 21 and the liquid crystal display section 2, which are configured to calculate the integrated value of the measured gas flow, and electrically display the integrated value in a numeric value form. Therefore, the integrated value of the gas flow can be displayed in the digital form.

The measurement value calculating section 21 determines whether or not the integrated value of the measured gas flow has reached 1 liter. Every time the measurement value calculating section 21 determines that the integrated value has reached 1 liter, it informs the light emission commanding section 22 of the determination result. Then, in response to this determination result, the light emission commanding section 22 causes the LED light emitting section 3 to emit light toward the sensor 7 every time the integrated value has reached 1 liter.

Therefore, the test device 6 can know that the integrated value of the gas flow measured in the gas meter apparatus 1 has reached 1 liter, from the light emission from the LED light emitting section 3. The LED light emitting section 3 emits the light in association with the display of the integrated value in the liquid crystal display section 2. Therefore, the fact that the test device 6 recognizes the light emission from the LED light emitting section 3 is the same as the fact that it recognizes that the integrated value displayed in the liquid crystal display section 2 increases by a value corresponding to 1 liter.

The gas meter apparatus 1 according to the present embodiment is able to conduct a test by a test method in which a change in the displayed integrated value of the gas flow is known from the reflected light of the emitted light, even in a case where the integrated value of the gas flow is displayed in the digital form.

In the gas meter apparatus 1, the light emission commanding section 22 causes the LED light emitting section 3 to emit light for a predetermined time, in response to the information from the measurement value calculating section 21. This predetermined time is in a time range in which the sensor 7 is able to sense the light emitted and received from the LED light emitting section 3. This time range may be suitably set depending on accuracy or the like of the sensor 7 which senses the light emission state.

In the gas meter apparatus 1, when the switch section 4 accepts the setting command information for causing the test mode to be set, the light emission commanding section 22 causes the LED light emitting section 3 to emit the light. Therefore, it becomes possible to prevent the LED light emitting section 3 from emitting the light during the use of the gas meter apparatus 1. This makes it possible to prevent the LED light emitting section 3 from emitting light unnecessarily during the use mode. Thus, an increase in electric power consumption caused by the light emission can be lessened.

In the gas meter apparatus 1 of the present embodiment, the measurement value calculating section 21 informs the light emission commanding section 22 of information indicating that the integrated value of a predetermined value (flow) has reached 1 liter. However, the integrated value of the predetermined value is not limited to 1 liter, but may be suitably set according to an integrated value unit of a desired gas flow to verify accuracy of the displayed integrated value of the gas flow in the gas meter apparatus 1. In other words, it may be said that the predetermined value is a value (integrated value of gas flow) used as a criterion to verify accuracy of the displayed integrated value of the gas flow in the gas meter apparatus 1.

Although in the above described configuration, the gas meter apparatus 1 is configured to switch between the use mode and the test mode via the switch section 4, the present invention is not limited to this. For example, the gas meter apparatus 1 may include an interface for providing connection with an outside CP (personal computer), etc.. A command for causing switching of the set mode may be input by this PC, to perform switching between the use mode and the test mode.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

A gas meter apparatus of the present invention is useful in conducting a test by a test method in which it is detected based on light whether or not an integrated value of gas flow matches a displayed integrated value, in a gas meter apparatus, etc., which displays the integrated value in a digital form.

### Reference Signs List

- 1: gas meter apparatus
- 2: liquid crystal display section
- 3: LED light emitting section
- 4: switch section
- 5: flow measuring device
- 6: test device
- 7: sensor
- 20: main control section
- 21: measurement value calculating section
- 22: light emission commanding section

## Claims

1. A gas meter apparatus comprising:
a measuring unit which measures a gas flow;
a display unit which electrically displays an integrated value of the gas flow measured by the measuring unit, the integrated value being displayed in a numeric value form;
a determiner unit which determines whether or the integrated value of the gas flow measured by the measuring unit has reached a predetermined value; and
a light emitting unit which emits light to outside every time the determiner unit determines that the integrated value has reached the predetermined value.

2. The gas meter apparatus according to Claim 1,
wherein a test mode indicating execution of a test for verifying whether or not the displayed integrated value of the gas flow is accurate and a use mode indicating a use state in which the integrated value of used gas flow is calculated by the gas meter apparatus are set in the gas meter apparatus, the gas meter apparatus further comprising:
an input unit which accepts setting command information which commands the test mode or the use mode to be set;
wherein when the input unit accepts the setting command information which commands the test mode to be set, the light emitting unit emits light toward a test device which verifies whether or not the displayed integrated value of the gas flow is accurate.

3. The gas meter apparatus according to Claim I or 2,
wherein the predetermined value of the integrated value used to perform determination in the determiner unit is 1 liter.

4. A test system comprising:
a gas meter apparatus including: a measuring unit which measures a gas flow; a display unit which electrically displays an integrated value of the gas flow measured by the measuring unit, the integrated value being displayed in a numeric value form; a determiner unit which determines whether or the integrated value of the gas flow measured by the measuring unit has reached a predetermined value; and a light emitting unit which emits light to outside every time the determiner unit determines that the integrated value has reached the predetermined value; and
a test device which verifies accuracy of the gas flow measured by the gas meter apparatus, based on the light emitted from the light emitting unit and received by the test device.
